# EUROPÄISCHE PATENTANMELDUNG

(11) **EP 3 745 567 A1**
(43) Veröffentlichungstag der Anmeldung: **02.12.2020**
(21) Anmeldenummer: 19177002.3
(22) Anmeldetag: 28.05.2019
(51) Int. Cl.: H02K 16/02, H02K 49/02, H02K 49/10, H02K 51/00

(54) **ELEKTRISCHE MASCHINE, INSBESONDERE ASYNCHRONMASCHINE**

(71) Anmelder: KEB Automation KG, 32683 Barntrup (DE)
(72) Erfinder: Rodewald-Tölle, Jobst-Dieter, 32683 Barntrup (DE)
(74) Vertreter: Rausch Wanischeck-Bergmann Brinkmann

(57) **Zusammenfassung**

Die Erfindung betrifft eine elektrische Maschine, insbesondere eine Asynchronmaschine, mit einem Innenrotor (4) mit Kurzschlusskäfig und einem den Innenrotor (4) umgebenden Stator (5), wobei der Innenrotor (4) eine Rotorwelle (6) aufweist, dadurch gekennzeichnet, dass der Innenrotor (4) den Stator (5) in Längsrichtung (7) der Rotorwelle (6) überragt, wobei zum Stator (5) axial benachbart ein den Innenrotor (4) umgebender Außenrotor (13) vorgesehen ist, der um die Rotorwelle (6) verdrehbar angeordnet ist und der rotorwellenseitig mit dem Kurzschlusskäfig des Innenrotors (4) in Wirkverbindung stehende Permanentmagnete (14) aufweist.

## Beschreibung

Die Erfindung betrifft eine elektrische Maschine, insbesondere eine Asynchronmaschine, mit einem Innenrotor mit Kurzschlusskäfig und einem den Innenrotor umgebenden Stator, wobei der Innenrotor eine Rotorwelle aufweist. Die Erfindung betrifft des Weiteren eine Pumpeneinrichtung, insbesondere zur Förderung von Kühlwasser für einen Verbrennungsmotor, mit einer Pumpe und einer elektrischen Maschine.

Das Kühlsystem eines wassergekühlten Verbrennungsmotors verfügt über eine Wasserpumpe, die im Betriebsfall Wasser als Kühlmittel in dem dafür vorgesehenen Kühlmittelkreislauf umwälzt.

Gemäß einer ersten vorbekannten Bauform erfolgt ein Antrieb der Wasserpumpe direkt durch den Verbrennungsmotor. Es kommt zu diesem Zweck typischerweise eine Riemenanordnung zum Einsatz, dergemäß verbrennungsmotorseitig eine erste Riemenscheibe und wasserpumpenseitig eine zweite Riemenscheibe vorgesehen sind, die mittels eines gemeinsamen Riemens miteinander in Wirkverbindung stehen.

Von Nachteil dieser vorbekannten Konstruktion ist, dass die Drehzahl der Wasserpumpe immer in einem festen Verhältnis zur Drehzahl des Verbrennungsmotors steht. Eine von der Drehzahl des Verbrennungsmotors unabhängige Drehzahlanpassung der Wasserpumpe ist nicht möglich. Dies führt in nachteiliger Weise dazu, dass insbesondere zu Beginn eines Betriebs eines Verbrennungsmotors mittels der Wasserpumpe Wasser umgewälzt und der Verbrennungsmotor gekühlt wird, obwohl der Verbrennungsmotor noch kalt ist und es insofern einer Kühlung des Verbrennungsmotors gar nicht bedarf. Zudem hat die Auslegung von Wasserpumpe und Drehzahl so zu erfolgen, dass eine optimierte Kühlung gestattet ist, wenn der Verbrennungsmotor unter Volllast arbeitet. Dies führt in nachteiliger Weise dazu, dass im Nichtvolllastbereich keine optimierte Kühlung des Verbrennungsmotors gegeben ist.

Um dem vorbeschriebenen Nachteil zu begegnen, ist es aus dem Stand der Technik bereits bekannt, für den Antrieb einer Wasserpumpe einen separaten Elektromotor vorzusehen. In Kombination mit einem Frequenzumrichter kann die Drehzahl des Elektromotors und damit auch die Drehzahl der Wasserpumpe unabhängig von der Drehzahl des Verbrennungsmotors eingestellt werden. Dies erlaubt einen hinsichtlich der Kühlung des Verbrennungsmotors optimierten Betrieb der Wasserpumpe.

Von Nachteil dieses Standes der Technik ist allerdings, dass die Konstruktion sehr aufwendig und vor allem teuer ist. Denn anstatt einer Riemenanordnung werden als zusätzliche Bauteile ein Elektromotor, ein Frequenzumrichter sowie die zugehörige Elektronik benötigt. Zudem ist ein bestimmungsgemäßer Wasserpumpenbetrieb abhängig von der ordnungsgemäßen Funktion des Elektromotors, des Frequenzumrichters und/oder der Elektronik. Zudem bedarf es einer entsprechenden Stromversorgung. Fallen die Elektronik, der Elektromotor und/oder der Frequenzumrichter aus oder ist die Stromversorgung unterbrochen, so ist ein bestimmungsgemäßer Betrieb der Wasserpumpe nicht mehr möglich, so dass auch ein Betrieb des Verbrennungsmotors nicht mehr gestattet ist. Ein Vollausfall des gesamten Systems ist in nachteiliger Weise die Folge.

Es ist ausgehend vom vorbeschriebenen Stand der Technik die **Aufgabe** der Erfindung, eine elektrische Maschine vorzuschlagen, die bei einem gleichzeitig einfachen Aufbau einen sicheren Betrieb eines davon anzutreibenden Verbrauchers, beispielsweise einer Pumpe gestattet. Zudem soll mit der Erfindung eine Pumpeneinrichtung mit einer solchen elektrischen Maschine vorgeschlagen werden.

Zur **Lösung** dieser Aufgabe wird mit der Erfindung eine elektrische Maschine der eingangs genannten Art vorgeschlagen, die sich dadurch auszeichnet, dass der Innenrotor den Stator in Längsrichtung der Rotorwelle überragt, wobei zum Stator axial benachbart ein den Innenrotor umgebender Außenrotor vorgesehen ist, der um die Rotorwelle verdrehbar angeordnet ist und der rotorwellenseitig mit dem Kurzschlusskäfig des Innenrotors in Wirkverbindung stehende Permanentmagnete aufweist.

Die erfindungsgemäße Maschine verfügt in Ergänzung zum Stator über einen Außenrotor. Dabei umgeben beide, das heißt sowohl der Stator als auch der Außenrotor den Innenrotor mit Kurzschlusskäfig. Der Stator und der Außenrotor sind in axialer Richtung, das heißt in Längsrichtung der Rotorwelle benachbart, das heißt nebeneinander angeordnet. Im Ergebnis dieser Konstruktion steht, dass sowohl der Stator als auch der benachbarte Außenrotor den Innenrotor mit Kurzschlusskäfig jeweils teilweise überlappen. Der Stator ist in an sich bekannter Weise feststehend ausgebildet. Im bestimmungsgemäßen Betriebsfall verdreht der Innenrotor um eine von der Rotorwelle bereitgestellte Achse. Es findet insofern in an sich bekannter Weise eine relative Verdrehung des Innenrotors gegenüber dem Stator statt.

Der erfindungsgemäß vorgesehene und zum Stator benachbarte Außenrotor ist anders als der Stator nicht feststehend, sondern verdrehbar ausgebildet. Dabei kann im Betriebsfall eine Verdrehbewegung des Außenrotors um die Rotorwelle, mithin um die von der Rotorwelle bereitgestellte Drehachse erfolgen. Der Außenrotor und der Innenrotor können mithin jeweils um dieselbe Drehachse verdrehen.

Der Außenrotor verfügt über Permanentmagnete. Diese sind rotorwellenseitig des Außenrotors ausgebildet. Sie können beispielsweise innenseitig des Außenrotors in diesen eingebettet sein. Diese vom Außenrotor bereitgestellten Permanentmagnete stehen in Wirkverbindung mit dem Kurzschlusskäfig des Innenrotors.

Die vorstehend beschriebene Konstruktion erlaubt einen Betrieb der elektrischen Maschine wie folgt. Infolge einer Verdrehbewegung des Außenrotors kommt es aufgrund der magnetischen Einwirkung der Permanentmagnete des Außenrotors auf den Kurzschlusskäfig des Innenrotors auch zu einer Verdrehbewegung des Innenrotors. Die zwischen dem Außenrotor und dem Innenrotor wirkenden Magnetkräfte sorgen mithin dafür, dass eine Verdrehbewegung des Außenrotors auf den Innenrotor übertragen wird, so dass dieser in Entsprechung einer Verdrehbewegung des Außenrotors mit dreht. Dabei drehen der Innenrotor und der Außenrotor um eine und dieselbe Drehachse.

Das durch die Permanentmagnete gegebene magnetische Feld hat zudem bei einer relativen Verdrehung von Außenrotor und Innenrotor einen elektrischen Stromfluss im Kurzschlusskäfig des Innenrotors zur Folge. Dieser Stromfluss induziert in Spulen des Stators elektrische Spannungen. Diese induzierten Wechselspannungen können mit Hilfe eines Gleichrichters in Gleichspannung umgewandelt und im Bedarfsfall eine Batterie mit elektrischem Strom speisen.

Ein wesentlicher Vorteil der erfindungsgemäßen Ausgestaltung liegt darin, dass die Drehzahl des Innenrotors und damit auch die vom Innenrotor bereitgestellte Rotorwelle unabhängig von der Drehzahl des Außenrotors variabel einstellbar sind. Dies wird durch eine Bestromung des Stators erreicht.

Im Falle einer Bestromung des Stators entsteht ein magnetisches Statordrehfeld. Dies bedingt Ströme im Kurzschlusskäfig des Innenrotors, die ein eigenes Magnetfeld erzeugen. Dabei führt die Verkopplung von Statordrehfeld und Innenrotorfeld zu einer Drehbewegung des Innenrotors, die derjenigen entgegenwirkt, die aufgrund des verdrehenden Außenrotors auf den Innenrotor übertragen wird. Es wird folglich bei einer Bestromung des Stators ein Bremsmoment erzeugt, das der durch den Außenrotor induzierten Verdrehbewegung des Innenrotors entgegenwirkt. Im Ergebnis kann so die Drehzahl des Innenrotors variabel eingestellt werden. Dabei ergibt sich die maximal mögliche Drehzahl des Innenrotors bei einer Nichtbestromung des Stators, in welchem Fall kein Bremsmoment gegeben ist. Bei einer Vollbestromung des Stators ist ein maximales Bremsmoment gegeben, das soweit gehen kann, dass der Rotor trotz drehendem Ringteil zum Stillstand kommt.

Ein anzutreibender Verbraucher, beispielsweise eine Wasserpumpe, kann direkt an die Rotorwelle des Innenrotors angekoppelt werden. Bei einer Verdrehbewegung der Rotorwelle wird so auch der Verbraucher, mithin beispielsweise die Wasserpumpe angetrieben. Dabei ist die Drehzahl des Verbrauchers, beispielsweise die Drehzahl der Pumpe in vorbeschriebener Weise dadurch einstellbar, dass der Stator bestromt und so ein Bremsmoment erzeugt wird.

Der Antrieb des Außenrotors erfolgt beispielsweise mittels eines Verbrennungsmotors, so dass sich im Ergebnis der erfindungsgemäßen Ausgestaltung ergibt, dass eine variable Drehzahleinstellung der Rotorwelle unabhängig von der Drehzahl des Verbrennungsmotors, mithin unabhängig von der Drehzahl des vom Verbrennungsmotor angetriebenen Außenrotors ist.

Die erfindungsgemäße Ausgestaltung erbringt insbesondere folgende Vorteile. Es ist eine variable Drehzahleinstellung der Rotorwelle möglich. Dabei kann im Unterschied zum Stand der Technik auf einen zusätzlichen Elektromotor und einen zusätzlichen Frequenzumrichter vollends verzichtet werden. Damit ist die erfindungsgemäße Konstruktion im Aufbau robust, wenig störanfällig und darüber hinaus preisgünstig in der Herstellung.

Die erfindungsgemäße Konstruktion bietet zudem Notlaufeigenschaften. Denn sollte beispielsweise die Elektronik aufgrund eines Fehlers ausfallen, so führt dies lediglich dazu, dass eine von der Drehzahl des Außenrotors unabhängige Drehzahlregelung der Rotorwelle nicht mehr möglich ist. Die elektrische Maschine als solche fällt aber im Unterschied zum Stand der Technik nicht aus. Die Drehzahl der Rotorwelle ergibt sich dann in Abhängigkeit der Drehzahl des Außenrotors, so dass der an die Rotorwelle angeschlossene Verbraucher, beispielsweise eine Pumpe mit voller Drehzahl dreht. Insofern ist mittels der erfindungsgemäßen Ausgestaltung sichergestellt, dass selbst im Defektfall noch ein bestimmungsgemäßer Betrieb eines an die elektrische Maschine angeschlossenen Verbrauchers ermöglicht ist. Und dies mit Volllast, so dass im Falle einer als Verbraucher angeschlossenen Wasserpumpe auch der zugehörige Verbrennungsmotor mit Volllast arbeiten kann. Ein solcher Notlaufbetrieb ist mit einer Konstruktion nach dem Stand der Technik nicht möglich.

Hinzu kommt ferner der Vorteil, dass mittels der elektrischen Maschine Rekuperationstromerzeugung gestattet ist, so dass entstehende Ströme in eine angeschlossene Batterie eingespeist werden können.

Die erfindungsgemäße Konstruktion ist alles in allem robust im Aufbau, vergleichsweise preiswert in der Herstellung, sicher im Betrieb und gewährleistet Notlaufeigenschaften.

Gemäß einem weiteren Merkmal der Erfindung ist vorgesehen, dass der Stator eine Erstreckung in Längsrichtung der Rotorwelle aufweist, die 35% bis 50%, vorzugsweise 60% der Erstreckung des Rotors in Längsrichtung der Rotorwelle entspricht.

Sowohl der Stator als auch der Außenrotor sind jeweils ringförmig ausgebildet und im endmontierten Zustand der elektrischen Maschine vom Innenrotor durchgriffen. Dabei sind der Stator und der Außenrotor in Längsrichtung der Rotorwelle hintereinander, das heißt benachbart zueinander angeordnet. Bevorzugterweise erstreckt sich der Stator in Längsrichtung der Rotorwelle über eine Länge des Innenrotors, die 60% der Erstreckung des Innenrotors in Längsrichtung der Rotorwelle entspricht. Dementsprechend ist gemäß einem weiteren Merkmal der Erfindung vorgesehen, dass das Ringteil eine Erstreckung in Längsrichtung der Rotorwelle aufweist, die 50% bis 65%, vorzugsweise 60% der Erstreckung des Rotors in Längsrichtung der Rotorwelle entspricht. Demnach ist also bevorzugterweise das Ringteil in Längsrichtung der Rotorwelle größer als der Stator ausgebildet.

Die Größenverhältnisse von Stator und Außenrotor in Längsrichtung des Innenrotors beziehungsweise der Rotorwelle sind so ausgelegt, dass eine bestimmungsgemäße Verdrehbewegung des Außenrotors bei ausgefallenem Stator, das heißt im Notfall die wünschenswerterweise zu erzielende Maximaldrehzahl der Rotorwelle sicherstellt. Damit ist gewährleistet, dass ein an die Rotorwelle angeschlossener Verbraucher auch im Notfall im Volllastbetrieb läuft.

Es ist gemäß einem weiteren Merkmal der Erfindung vorgesehen, dass der Rotor als Kurzschlussläufer ausgebildet ist. Dies erbringt eine kompakte und funktionssichere Bauform. Demgemäß verfügt der Innenrotor über eine Rotorwelle und einen Kurzschlusskäfig, wobei der Kurzschlusskäfig ein Blechpaket mit darin eingebetteten Metallstäben aufweist. Die Metallstäbe sind kurzgeschlossen, zu welchem Zweck die Metallstäbe jeweils endseitig an Kurzschlussringe angeschlossen sind.

Gemäß einem weiteren Merkmal der Erfindung ist vorgesehen, dass der Außenrotor in Wirkverbindung mit einem motorangetriebenen Kraftübertragungsglied steht. Ein solches Kraftübertragungsglied kann beispielsweise eine Kette, ein Riemen und/oder dergleichen sein. Im bestimmungsgemäßen Betriebsfall erfolgt jedenfalls ein Antrieb des Außenrotors durch einen Motor, beispielsweise einen Verbrennungsmotor, wobei zwecks Kraftübertragung vom Motor auf den Außenrotor das Kraftübertragungsglied dient.

Es ist gemäß einem weiteren Merkmal der Erfindung vorgesehen, dass der Außenrotor als Riemenscheibe ausgebildet ist. Dementsprechend kommt bevorzugterweise als Kraftübertragungsglied ein Riemen zum Einsatz, der einerseits mit dem als Riemenscheibe ausgebildeten Außenrotor und andererseits mit einer motorangetriebenen zweiten Riemenscheibe zusammenwirkt. Es ist so eine im Aufbau einfache, robuste und zugleich im Betrieb sichere Ausgestaltung gegeben.

Gemäß einem weiteren Merkmal der Erfindung ist vorgesehen, dass das Ringteil aus Kunststoff gebildet ist. Die vom Ringteil bereitgestellten Permanentmagnete sind dabei bevorzugterweise rotorwellenseitig in den Kunststoff des Ringteils eingebettet. Es ist so eine verliersichere Anordnung der Permanentmagnete gegeben. Zudem erlaubt diese Konstruktion eine einfache Herstellung des Ringteils, wobei in einem Arbeitsschritt sowohl das Ringteil als auch die Einbettung der Permanentmagnete erfolgen kann.

Es ist gemäß einem weiteren Merkmal der Erfindung vorgesehen, dass der Stator ein Statorgehäuse aufweist, das innenseitig Statorzähne trägt, wobei auf jeden Statorzahn ein Spulenelement aufgesetzt ist. In vorteilhafter Weise erbringt dies eine vereinfachte Herstellung des Stators. Statt einer kompliziert verteilten Bewicklung können die Spulenelemente auf die jeweils zugehörigen Statorzähne aufgesteckt und elektrisch kontaktiert werden.

Gemäß einem weiteren Merkmal der Erfindung ist vorgesehen, dass zwischen zwei benachbarten und jeweils mit einem Spulenelement ausgerüsteten Statorzähnen ein spulenelementfreier Statorzahn angeordnet ist. Eine solche Ausgestaltung lässt sich besonders einfach herstellen, da in jeder Nut zwischen zwei Statorzähnen nur ein Spulenelementabschnitt eines einzigen Spulenelements angeordnet ist. Dadurch kann ferner ein besonders hoher Nutfüllfaktor erreicht werden.

Gemäß einem weiteren Merkmal der Erfindung ist vorgesehen, dass benachbarte Spulenelementabschnitte der Spulenelemente benachbarter Statorzähne gegeneinander anliegen. Es wird so eine sehr kompakte Bauform erreicht.

Gemäß einer alternativen Ausgestaltung ist gemäß einem weiteren Merkmal der Erfindung vorgesehen, dass die in einer zwischen zwei benachbarten Statorzähnen ausgebildeten Nut angeordneten Spulenelementabschnitte nebeneinander, übereinander oder von Nut zu Nut abwechselnd nebeneinander und übereinander angeordnet sind. Dabei ist ein Spulenelementabschnitt derjenige Abschnitt eines Spulenelements, der in einer Nut angeordnet ist. In vorteilhafter Weise erlaubt diese Spulenelementanordnung die Ausbildung einer kompakten sowie hochpoligen elektrischen Maschine. Darüber hinaus ergibt sich eine besonders kompakte Bauweise.

Mit der Erfindung wird zur **Lösung** der vorstehenden Aufgabe zudem vorgeschlagen eine Pumpeneinrichtung, insbesondere zur Förderung von Kühlwasser für einen Verbrennungsmotor, mit einer Pumpe und einer elektrischen Maschine der erfindungsgemäßen Art, wobei die Pumpe ein Pumpenrad aufweist, das von der Rotorwelle der elektrischen Maschine angetrieben ist.

Die erfindungsgemäße Pumpeneinrichtung verfügt über eine elektrische Maschine nach der Erfindung einerseits sowie über eine Pumpe andererseits. Dabei weist die Pumpe ein Pumpenrad auf, das erfindungsgemäß von der Rotorwelle der elektrischen Maschine angetrieben ist. Im Falle einer Verdrehbewegung der Rotorwelle kommt es mithin zu einer Verdrehbewegung auch des Pumpenrades, womit sich die Pumpe im bestimmungsgemäßen Pumpenbetrieb befindet. In schon vorerläuterter Weise ist die Drehzahl der Rotorwelle variabel einstellbar, was es gestattet, die Drehzahl des mit der Rotorwelle gekoppelten Pumpenrades und damit die Förderleistung der Pumpe wahlweise variabel einzustellen.

Gemäß einem weiteren Merkmal der Erfindung ist vorgesehen, dass das Pumpenrad verdrehfest auf der Rotorwelle angeordnet ist. Diese Ausgestaltung erweist sich als besonders einfach im Aufbau und gewährleistet zudem einen sicheren Betrieb.

Es ist gemäß einem weiteren Merkmal der Erfindung vorgesehen, dass die Pumpe ein Pumpengehäuse mit einem daran vorzugsweise einstückig angeordneten Lagerfortsatz aufweist, wobei der Lagerfortsatz den Außenrotor der elektrischen Maschine verdrehbar aufnimmt.

Die Pumpe verfügt in an sich bekannter Weise über ein Pumpengehäuse, das das Pumpenrad verdrehbar aufnimmt. Erfindungsgemäß ist das Pumpengehäuse mit einem Lagerfortsatz ausgerüstet. Dieser ist bevorzugterweise einstückig am Pumpengehäuse angeordnet. Der Lagerfortsatz dient der verdrehbaren Aufnahme des Ringteils der elektrischen Maschine. Es ist so ein insgesamt sehr kompakter Aufbau der gesamten Pumpeneinrichtung gegeben. Die elektrische Maschine sowie die Pumpe bilden quasi in Ausgestaltung der Pumpeneinrichtung ein einstückig zu handhabendes Bauteil. Dabei ist die Rotorwelle der elektrischen Maschine bis in das Pumpengehäuse der Pumpe verlängert, was eine verdrehfeste Anordnung des vom Pumpengehäuse beherbergten Pumpenrades auf der Rotorwelle gestattet. Da das Pumpengehäuse den Lagersitz für den Außenrotor der elektrischen Maschine bereitstellt, ist eine dichte Nebeneinanderordnung von Pumpe und elektrischer Maschine erreicht, was insgesamt zu der sehr kompakten Bauweise der erfindungsgemäßen Pumpeneinrichtung führt.

Gemäß einem weiteren Merkmal der Erfindung ist vorgesehen, dass der Außenrotor einen Aufnahmeraum zur zumindest teilweisen Einhausung des Innenrotors der elektrischen Maschine aufweist. Auch diese konstruktive Maßnahme führt zu einer insgesamt sehr kompakten Ausgestaltung der Pumpeneinrichtung und stellt zudem sicher, dass der Innenrotor der elektrischen Maschine vor ungewollten äußeren Einflüssen weitestgehend geschützt ist. Ein sicherer Betrieb der Pumpeneinrichtung wird hierdurch in vorteilhafter Weise unterstützt.

Die Pumpeneinrichtung nach der Erfindung erlaubt im Ergebnis eine von der Drehzahl von einem Verbrennungsmotor angetriebenen Ringteils unabhängige Drehzahleinstellung des Pumpenrades. Damit kann die Förderleistung der Pumpe unabhängig vom Verbrennungsmotor eingestellt werden, so dass eine Kühlung des Verbrennungsmotors optimiert auf dessen momentanen Belastungszustand eingestellt werden kann. Typischerweise wird ein Verbrennungsmotor, wie er beispielsweise in Arbeitsmaschinen zum Einsatz kommt, zu 80% nicht mit Volllast betrieben. Außerhalb eines Volllastbetriebs bedarf es keiner auf den Volllastbetrieb ausgerichteten Kühlung des Verbrennungsmotors. Die erfindungsgemäße Ausgestaltung erlaubt dies zu ermöglichen, da die Drehzahl des Pumpenrades in vorbeschriebener Weise variable und wahlweise einstellbar ist. Damit ist eine an den momentanen Lastbetrieb des Verbrennungsmotors optimierte Kühlung möglich.

Weitere Merkmale und Vorteile der Erfindung ergeben sich aus der nachfolgenden Beschreibung anhand der Figuren. Dabei zeigen
- Fig. 1: in einem schematischen Längsschnitt die erfindungsgemäße elektrische Maschine;
- Fig. 2: in einem schematischen Querschnitt den Stator der elektrischen Maschine nach Fig. 1 und
- Fig. 3: in einer schematischen Darstellung eine erfindungsgemäße Pumpeneinrichtung.

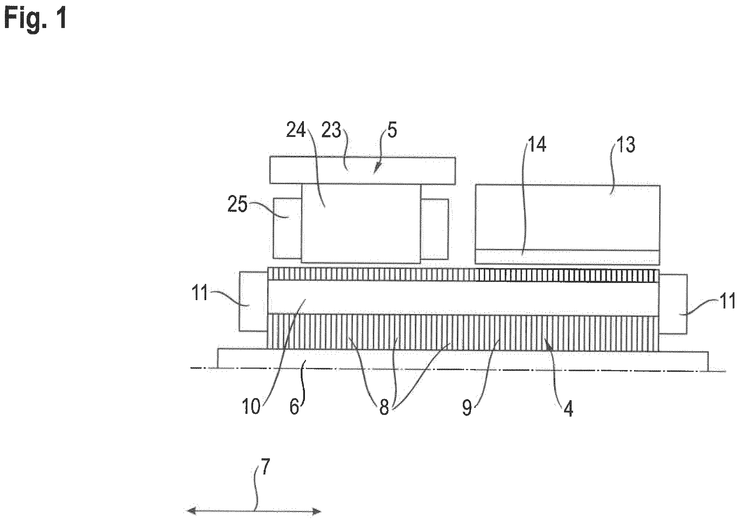

Fig. 1 zeigt in einer prinzipiellen Darstellung den oberen Teil einer elektrischen Maschine 1 nach der Erfindung in einem Längsschnitt.

Bei der elektrischen Maschine 1 handelt es sich um eine Asynchronmaschine. Dies weist einen Innenrotor 4 auf, der als Kurzschlussläufer ausgebildet ist. Er verfügt über ein auf einer Rotorwelle 6 angeordnetes Eisenblechpaket 9 aus einzelnen Blechen 8, wobei in das Eisenblechpaket 9 Metallstäbe 10 aus Nichteisenmetallen eingebettet sind. Die Metallstäbe 10 sind beidseitig jeweils mit metallenen Kurzschlussringen 11 versehen und damit kurzgeschlossen.

Unter Belassung eines Luftspalts ist der Innenrotor 4 von einem Stator 5 umgeben. Dabei überragt der Innenrotor 4 den Stator 5 in Längsrichtung 7 der Rotorwelle 6.

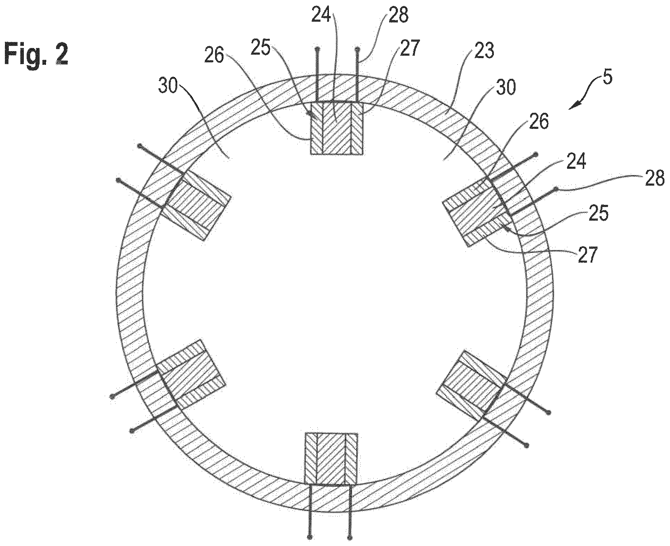

Wie sich insbesondere aus einer Zusammenschau der Figuren 1 und 2 ergibt, verfügt der Stator 5 über ein gegenüber dem Innenrotor 4 feststehendes Statorgehäuse 23. Dieses trägt innenseitig Statorzähne 24, wobei auf jeden Statorzahn 24 ein Spulenelement 25 aufgesetzt ist. Zwischen zwei Statorzähnen 24 ist jeweils eine Nut 30 ausgebildet. Diese nimmt die Spulenelementabschnitte 26 und 27 benachbarter Spulenelemente 25 auf. Dabei ist es besonders bevorzugt, die in einer zwischen zwei benachbarten Statorzähnen 24 ausgebildeten Nut 30 angeordneten Spulenelementabschnitte 26 und 27 nebeneinander, übereinander oder von Nut 30 zu Nut 30 abwechselnd nebeneinander und übereinander anzuordnen.

Für eine elektrische Kontaktierung der Spulenelemente 25 ist je Spulenelement 25 ein entsprechender elektrischer Anschluss 28 vorgesehen.

Die elektrische Maschine 1 verfügt des Weiteren über ein Außenrotor 13, wie sich dies aus der Darstellung nach Fig. 1 ergibt. Der Außenrotor 13 ist als Ringteil ausgebildet und umgibt ebenso wie der Stator 5 den Innenrotor 4 ringförmig. Dabei ist der Außenrotor 13 zum Stator 5 axial benachbart angeordnet, und zwar unter Ausbildung eines Spaltraums. Der Außenrotor 13 und der Stator 5 liegen mithin nicht aneinander an. Denn der Außenrotor 13 ist im Unterschied zum Stator 5 in Relation zum Innenrotor 4 nicht feststehend ausgebildet. Es ist vielmehr vorgesehen, dass der den Innenrotor 4 umgebende Außenrotor 13 um die Rotorwelle 6 verdrehbar ist, das heißt der Innenrotor 4 und der Außenrotor 13 können um dieselbe von der Rotorwelle 6 bereitgestellte Drehachse verdrehen.

Der Außenrotor 13 verfügt über Permanentmagnete 14. Diese sind rotorwellenseitig angeordnet und stehen in Wirkverbindung mit dem Innenrotor 4.

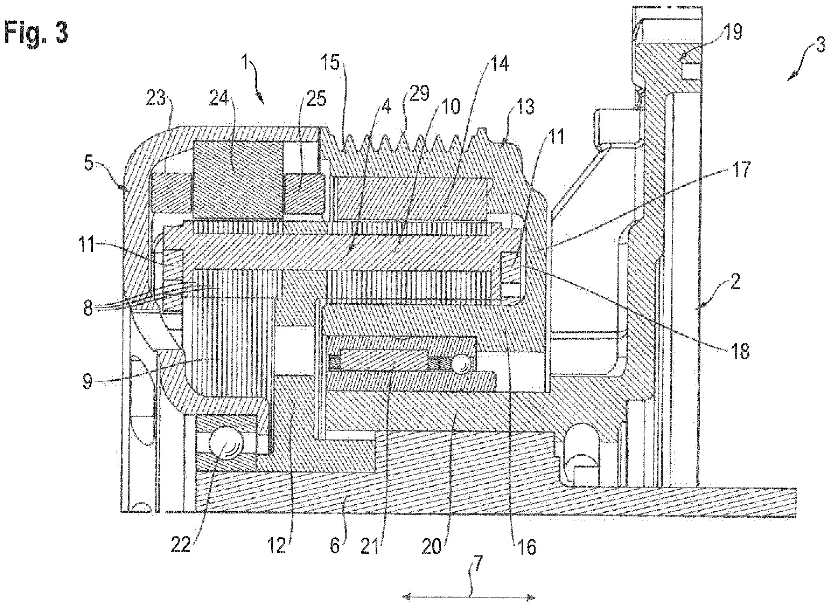

Fig. 3 lässt in schematischer Darstellung eine erfindungsgemäße Pumpeneinrichtung 3 erkennen. Diese verfügt über eine elektrische Maschine 1 gemäß der Figuren 1 und 2 sowie über eine Pumpe 2. Die Pumpe 2 verfügt ihrerseits über ein Pumpengehäuse 19 sowie über ein in den Figuren nicht näher dargestelltes Pumpenrad. Dabei ist das Pumpenrad verdrehfest auf der Rotorwelle 6 angeordnete, die sich bis in das Pumpengehäuse 19 erstreckt, wie sich dies aus der Darstellung nach Fig. 3 ergibt.

Das Pumpengehäuse 19 verfügt über einen einstückig damit ausgebildeten Lagerfortsatz 20. Dieser trägt unter Zwischenordnung eines Lagers 21 den Außenrotor 13 verdrehbar. Im gezeigten Ausführungsbeispiel nach Fig. 3 verfügt der Außenrotor 13 über einen Kopfabschnitt 15 und über einen Fußabschnitt 16, die über einen gemeinsamen Seitenabschnitt 17 miteinander verbunden sind. Es ist so ein Aufnahmeraum 18 gebildet, der der zumindest teilweisen Einhausung des Innenrotors 4 der elektrischen Maschine 1 dient.

Der Kopfabschnitt 15 stellt außenumfangsseitig eine Aufnahmefläche 29 bereit, über die im endmontierten Zustand ein Riemen geführt ist. Im bestimmungsgemäßen Verwendungsfall wird dieser Riemen durch einen in den Figuren nicht näher dargestellten Verbrennungsmotor angetrieben, was eine Verdrehbewegung des Außenrotors 13 zur Folge hat.

Im gezeigten Ausführungsbespiel ist das Eisenblechpaket 9 mit den Metallstäben 10 des Innenrotors 4 mittels einer Mitnehmerscheibe 12 kraftübertragend an die Rotorwelle 6 angeschlossen. Eine Verdrehbewegung des Innenrotors 4 führt mithin zu einer Verdrehbewegung der Rotorwelle 6 um die sich in Längsrichtung 7 erstreckende Drehachse der Rotorwelle 6, womit es auch zu einer Verdrehbewegung des verdrehfest mit der Rotorwelle 6 verbundenen Pumpenrades kommt.

Das Statorgehäuse 23 schließt sich mit Bezug auf die Blattebene nach Fig. 3 linksseitig des Außenrotors 13 an und stellt ebenfalls einen Aufnahmeraum zur zumindest teilweisen Einhausung des Innenrotors 4 bereit, so dass dieser insgesamt vor äußeren Einflüssen sicher geschützt ist. Zur verdrehbaren Abstützung der Rotorwelle 6 gegenüber dem Statorgehäuse 23 dient im dargestellten Ausführungsbeispiel ein Kugellager 22.

Im bestimmungsgemäßen Anwendungsfall erfolgt eine Verdrehbewegung des Außenrotors 13 mittels des in den Figuren nicht dargestellten Verbrennungsmotors. Die vom Außenrotor 13 bereitgestellten Permanentmagnete 14 bewirken ein Mitverdrehen des Innenrotors 4 einschließlich der davon bereitgestellten Rotorwelle 6. Dies führt zu einer Verdrehbewegung auch des Pumpenrades, so dass die Pumpe 2 in bestimmungsgemäßer Weise Wasser als Kühlmittel für den Verbrennungsmotor fördert.

Mittels des Stators 5 kann durch eine entsprechende Bestromung ein Gegenfeld angelegt werden, was die durch den Außenrotor 13 bewirkte Verdrehbewegung des Innenrotors 4 abbremst. Es lässt sich so in Abhängigkeit der Statorbestromung die Drehzahl der Rotorwelle 6 und damit auch die Drehzahl des damit in Wirkverbindung stehenden Pumpenrades wahlweise variabel einstellen, was es gestattet, die Förderleistung der Pumpe auf die momentane Betriebslast des Verbrennungsmotors optimiert einzustellen.

### Bezugszeichen

- 1: elektrische Maschine
- 2: Pumpe
- 3: Pumpeneinrichtung
- 4: Innenrotor
- 5: Stator
- 6: Rotorwelle
- 7: Längsrichtung
- 8: Blech
- 9: Eisenblechpaket
- 10: Metallstab
- 11: Kurzschlussring
- 12: Mitnehmerscheibe
- 13: Außenrotor
- 14: Permanentmagnet
- 15: Kopfabschnitt
- 16: Fußabschnitt
- 17: Seitenabschnitt
- 18: Aufnahmeraum
- 19: Pumpengehäuse
- 20: Lagerfortsatz
- 21: Lager
- 22: Lager
- 23: Statorgehäuse
- 24: Statorzahn
- 25: Spulenelement
- 26: Spulenelementabschnitt
- 27: Spulenelementabschnitt
- 28: elektrischer Anschluss
- 29: Aufnahmefläche
- 30: Nut

## Patentansprüche

1. Elektrische Maschine, insbesondere Asynchronmaschine, mit einem Innenrotor (4) mit Kurzschlusskäfig und einem den Innenrotor (4) umgebenden Stator (5), wobei der Innenrotor (4) eine Rotorwelle (6) aufweist, **dadurch gekennzeichnet, dass** der Innenrotor (4) den Stator (5) in Längsrichtung (7) der Rotorwelle (6) überragt, wobei zum Stator (5) axial benachbart ein den Innenrotor (4) umgebender Außenrotor (13) vorgesehen ist, der um die Rotorwelle (6) verdrehbar angeordnet ist und der rotorwellenseitig mit dem Kurzschlusskäfig des Innenrotors (4) in Wirkverbindung stehende Permanentmagnete (14) aufweist.

2. Maschine nach Anspruch 1, **dadurch gekennzeichnet, dass** der Stator (5) eine Erstreckung in Längsrichtung (7) der Rotorwelle (6) aufweist, die 35% bis 50%, vorzugsweise 40% der Erstreckung des Innenrotors (4) in Längsrichtung (7) der Rotorwelle (6) entspricht.

3. Maschine nach Anspruch 1 oder 2, **dadurch gekennzeichnet, dass** der Außenrotor (13) eine Erstreckung in Längsrichtung (7) der Rotorwelle (6) aufweist, die 50% bis 65%, vorzugsweise 60% der Erstreckung des Innenrotors (4) in Längsrichtung (7) der Rotorwelle (6) entspricht.

4. Maschine nach einem der vorhergehenden Ansprüche, **dadurch gekennzeichnet, dass** der Innenrotor (4) als Kurzschlussläufer ausgebildet ist, und einen Kurzschlusskäfig mit zwei Kurzschlussringen (11) und mehreren Metallstäben (10) aufweist.

5. Maschine nach einem der vorhergehenden Ansprüche, **dadurch gekennzeichnet, dass** der Außenrotor (13) in Wirkverbindung mit einem motorangetriebenen Kraftübertragungsglied steht.

6. Maschine nach einem der vorhergehenden Ansprüche, **dadurch gekennzeichnet, dass** der Außenrotor (13) als Riemenscheibe ausgebildet ist.

7. Maschine nach einem der vorhergehenden Ansprüche, **dadurch gekennzeichnet, dass** der Außenrotor (13) aus Kunststoff gebildet ist.

8. Maschine nach einem der vorhergehenden Ansprüche, **dadurch gekennzeichnet, dass** der Stator (5) ein Statorgehäuse (23) aufweist, das innenseitig Statorzähne (24) trägt, wobei auf jeden Statorzahn (24) ein Spulenelement (25) aufgesetzt ist.

9. Maschine nach Anspruch 8, **dadurch gekennzeichnet, dass** zwischen zwei benachbarten und jeweils mit einem Spulenelement (25) ausgerüsteten Statorzähnen (24) ein spulenelementfreier Statorzahn (24) angeordnet ist.

10. Maschine nach Anspruch 8, **dadurch gekennzeichnet, dass** benachbarte Spulenelementabschnitte (26, 27) der Spulenelemente (25) benachbarter Statorzähne (24) gegeneinander anliegen.

11. Maschine nach Anspruch 8, **dadurch gekennzeichnet, dass** die in einer zwischen zwei benachbarten Statorzähnen (24) ausgebildeten Nut (30) angeordneten Spulenelementabschnitte (26, 27) nebeneinander, übereinander oder von Nut (30) zu Nut (30) abwechselnd nebeneinander und übereinander angeordnet sind.

12. Pumpeneinrichtung, insbesondere zur Förderung von Kühlwasser für einen Verbrennungsmotor, mit einer Pumpe (2) und einer elektrischen Maschine (1) nach einem der vorhergehenden Ansprüche 1 bis 11, wobei die Pumpe (2) ein Pumpenrad aufweist, das von der Rotorwelle (6) der elektrischen Maschine (1) angetrieben ist.

13. Pumpeneinrichtung nach Anspruch 12, **dadurch gekennzeichnet, dass** das Pumpenrad verdrehfest auf der Rotorwelle (6) angeordnet ist.

14. Pumpeneinrichtung nach Anspruch 12 oder 13, dass die Pumpe (2) ein Pumpengehäuse (19) mit einem daran vorzugsweise einstückig angeordneten Lagerfortsatz (20) aufweist, wobei der Lagerfortsatz (20) der Außenrotor (13) der elektrischen Maschine (1) verdrehbar aufnimmt.

15. Pumpeneinrichtung nach einem der vorhergehenden Ansprüche 12 bis 14, **dadurch gekennzeichnet, dass** der Außenrotor (13) einen Aufnahmeraum (18) zur zumindest teilweisen Einhausung des Innenrotors (4) der elektrischen Maschine (1) aufweist.
